(19)

Europäisches
Patentamt

European
Patent Office

Office européen
des brevets

(11)  **EP 4 145 207 B1**

(12)  **EUROPEAN PATENT SPECIFICATION**

(45) Date of publication and mention
of the grant of the patent:
**09.07.2025  Bulletin 2025/28**

(21) Application number: **21194934.2**

(22) Date of filing: **03.09.2021**

(51) International Patent Classification (IPC):
*G02B 21/00* (2006.01)    *G02B 21/06* (2006.01)
*G02F 1/11* (2006.01)    *G02B 26/10* (2006.01)

(52) Cooperative Patent Classification (CPC):
**G02B 21/0032; G02B 21/0064; G02B 21/008;
G02B 21/06; G02F 1/11;** G02B 26/105

(54)  **OPTICAL FILTER DEVICE FOR ILLUMINATING A SAMPLE**

OPTISCHE FILTERVORRICHTUNG ZUR BELEUCHTUNG EINER PROBE

DISPOSITIF DE FILTRE OPTIQUE POUR ÉCLAIRER UN ÉCHANTILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.03.2023  Bulletin 2023/10**

(73) Proprietor: **Leica Microsystems CMS GmbH
35578 Wetzlar (DE)**

(72) Inventor: **Krishnamachari, Vishnu Vardhan
64625 Bensheim (DE)**

(74) Representative: **Schaumburg und Partner
Patentanwälte mbB
Mauerkircherstraße 31
81679 München (DE)**

(56) References cited:
**WO-A1-2019/138119    WO-A1-2019/206646**

## Description

Technical field

The present invention relates to an optical filter device comprising an acousto-optic tunable filter for illuminating a sample.

Background

In microscopic and spectroscopic applications, acousto-optic tunable filters are conventionally used for filtering selected wavelengths from light which is generated by broad-band laser sources such as supercontinuum lasers. The optical filter function of such devices can be easily changed by applying a specific radio frequency signal to a piezoelectric transducer which generates an acoustic wave in the filter crystal. The acoustic wave causes refractive index fluctuations in the filter material, these fluctuations acting as a diffraction grating. Thus, the light propagating through the filter material is diffracted in case that the light wavelength matches the diffraction grating. The bandwidth of the output light transmitted through the filter is determined by the specific filter design which may take into account parameters of such as the orientation of the filter crystal with respect to the incident light direction and the length of the transducer.

Existing filter designs are excellent in terms of diffraction efficiency, but somewhat at the expense of a significant wavelength-dependent angular spread of the output light emitted by the acousto-optic tunable filter. A wavelength-dependent angular spread may be tolerated to some extent in a number of applications. However, specifically in high resolution imaging applications such as confocal microscopy it is desirable to have almost perfectly collinear light output from the acousto-optic tunable filter over the entire spectral bandwidth.

Furthermore, in some applications as for instance in Raman spectroscopy it is essential to illuminate a specific target region of the sample with two or three different wavelengths at the same time. However, since existing filter designs tolerate a significant wavelength-dependent angular spread of the output light, it is still difficult to implement an efficient sample illumination using a single acousto-optic tunable filter in those applications.

Document WO 2019/138119 A1 discloses an optical filter device according to the preamble of claim 1. The device includes an acousto-optical element 1 which is arranged in a beam path of an incident light beam. The device is configured to reduce the chromatic spread angle of the light diffracted by the acousto-optical element. For this, the device includes two focusing optical systems which are arranged upstream and downstream of the acousto-optical element, respectively. The upstream focusing optical system is arranged such that the light rays of the incident light beam are bundled into a focus within the acousto-optical element.

Document WO 2019/206646 A1 discloses an arrangement for multi-color illumination comprising an acousto-optical tunable filter that is configured to diffract two light components of incident illumination light into different diffraction order directions.

Summary

It is an object to provide an optical filter device and a method enabling an acousto-optic tunable filter to simultaneously illuminate a specific target region of a sample with multiple wavelengths.

An optical filter device for illuminating a sample comprises a light supply unit configured to generate input light of a predetermined spectral bandwidth in a collinear manner. The optical filter device further comprises an acousto-optic tunable filter configured to receive the input light and to emit diffracted output light including multiple wavelengths from the spectral bandwidth at exit angles towards the sample, said exit angles defining an angular spread among the multiple wavelengths of the output light. The angular spread among the multiple wavelengths of the output light is determined by an angular characteristic varying from a minimum wavelength to a maximum wavelength. The angular characteristic has an extremum at an intermediate wavelength between the minimum wavelength and the maximum wavelength to provide at least one group of different wavelengths having the same exit angles.

Conventional filter designs usually have angular characteristics which vary monotonically from a minimum wavelength to a maximum wavelength. In contrast, the new filter design proposes an angular characteristic having an extremum between the minimum wavelength and the maximum wavelength which enables different wavelengths to have the same exit angle when being emitted from the acousto-optic tunable filter. Thus, the acousto-optic tunable filter is enabled to simultaneously illuminate a specific target region of a sample with multiple wavelengths.

Accordingly, the optical filter device can be used advantageously in microscopic applications where it is important to illuminate a specific point in the sample with different wavelengths at the same time. Taking into account the specific conditions in various microscopic applications, the inventor realized that an acousto-optic tunable filter can be designed such that, on the one hand, the exit angle is the same with respect to at least two wavelength and, on the other hand, any limitations that may result from the new filter design compared to conventional designs are not detrimental in the specific applications. In particular, the inventor recognized that it is possible to achieve the intended angular filter characteristic while limiting the light entry into the acousto-optic tunable filter to a collinear entry, and a collinear light entry over a certain spectral bandwidth is provided anyway in the applications under consideration. As result, an improved optical filter device is provided for applications with collinear light entry without having to accept any limitations which would be relevant for these applications.

Furthermore, providing the angular characteristic with an extremum allows to reduce the wavelength-dependent angular spread among the multiple wavelengths emitted from the acousto-optic tunable filter. Preferably, the acousto-optic tunable filter is formed in accordance with a filter design determining the angular acceptance range with respect to the input light and the angular spread among the multiple wavelengths of the output light. The filter design may deviate from a parallel-tangent condition to reduce the angular spread among the multiple wavelengths of the output light while limiting the angular acceptance range with respect to the input light over the spectral bandwidth thereof to collinear light incidence.

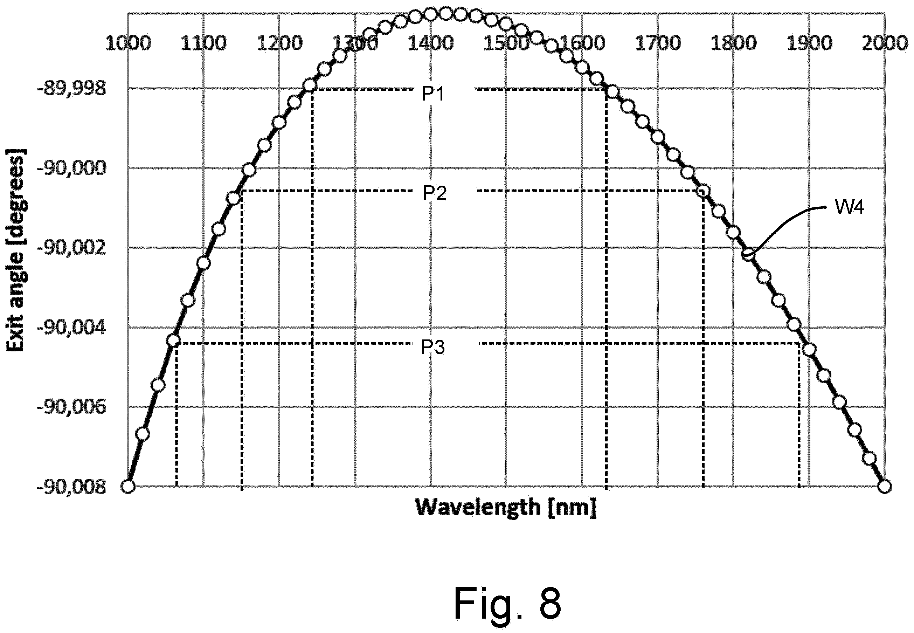

Conventionally, an acousto-optic tunable filter is designed to operate in the so-called parallel-tangent condition. A filter design which is based on the parallel-tangent condition yields an acousto-optic tunable filter with a wide angular acceptance range which corresponds to the field of view (FOV) of the filter. As known in the art, the parallel-tangent condition means that the tangents to the index surfaces on the wave-vector surfaces of the incident and the diffracted polarizations at the points of intersection of the corresponding waves are parallel to each other. In this respect, reference is made e.g. to [1], J.D. Ward et al., "Acousto-optic devices for operation with $2\mu$m fibre lasers", Proc. of SPIE, Vol. 9730, 2015, section 4.1; [2], I. C. Chang, "Noncollinear acousto-optic filter with large angular aperture", Appl. Phys. Lett. 25, 370 (1974); and [3], Application Note ISOMET, "Acousto Opttic Tunable Filters / Basic Theory And Design Considerations, Page 8, Figure 8 (https://www.isomet.com/App-Manual_pdf//AOTF-Notes.pdf). Such a conventional filter design satisfying the parallel-tangent condition has the advantage of a wide angular acceptance range. However, the inventor realized that this advantage comes at the expense of a relatively large angular spread of the output light over the spectral bandwidth given by the input light, and the inventor further realized that the angular spread may be detrimental in specific applications as for example in confocal microscopy. Surprisingly, the inventor found out that a new filter design deviating from the ubiquitous parallel-tangent condition enables the wavelength-dependent angular spread of the output light to be significantly reduced compared to conventional filter designs that satisfy the parallel-tangent condition. When deviating from the parallel-tangent condition, it must be accepted that the angular acceptance range of the acousto-optic tunable filter with respect to the input light is reduced compared to the conventional filter design. Therefore, the solution presented herein proposes that the angular acceptance range of the acousto-optic tunable filter is essentially limited to a collinear light incidence. Thus, a limitation to collinear light incidence can be easily implemented in a number of possible applications, in particular in confocal microscopy.

It is to be noted that the technical teaching proposed herein is not limited to a filter design which deviates from the parallel-tangent condition as described above. A deviation from the parallel-tangent condition is to be considered merely as an example for a suitable design. Any other filter design can be applied as long as the acousto-optic tunable filter provides the desired angular characteristic by limiting the light entry over the spectral bandwidth to a collinear input.

Preferably, the filter design is determined in relation to a reference filter design satisfying the parallel-tangent condition to reduce both the angular acceptance range with respect to the input light and the angular spread among the multiple wavelengths in comparison with the reference filter design. Thus, it is been found that even a small deviation from the parallel-tangent condition reduces the wavelength-dependent angular spread of the output light significantly.

Preferably, the filter design comprises at least one filter parameter selected from a group including an orientation of the light entrance surface, an orientation of the light emission surface, an orientation of the transducer surface, and a dimension of the transducer. By modifying one or more of the above filter parameters as compared to the conventional filter design a significant reduction of the angular spread among the multiple wavelengths filtered out from the spectral bandwidth of the input light can be achieved.

According to a preferred embodiment, the at least one group is a pair of different wavelengths or a triple of different wavelengths. When using two different wavelengths per group at the same exit angle, the acousto-optic tunable filter may be regarded as an achromatic configuration. Further, when using three different wavelengths per group at the same exit angle, the acousto-optic tunable filter may be regarded as an apochromatic configuration.

In this respect, it is to be noted that achromatic and apochromatic designs are known in the field of optical lenses. In optical lenses, due to the dependence of the refractive index of the glass medium on the incident wavelength, the effective focal length is not the same for all wavelengths. In other words, chromatic aberration occurs. To correct for this chromatic aberration, achromatic and apochromatic lens configurations use two and three types of glass materials with different refractive indices, respectively. While the new filter design also achieves such an achromatic or apochromatic effect, it is not necessary to combine multiple filter materials to achieve this effect. Rather, the effect is achieved in the new filter design due to the wavelength-dependent refractive index and the wavelength-dependent birefringence of the filter crystal material which may be tellurium dioxide.

Preferably, the minimum wavelength and the maximum wavelength define an operating range in which the acousto-optic tunable filter is operated for tuning the wavelengths of the output light. The operating range may be determined by the control unit.

Preferably, the angular acceptance range with respect to the input light is limited to to $\pm 5$ milliradians, preferably +/- 1 milliradian relative to a nominal direction of light incidence.

According to a preferred embodiment, the optical filter device comprises a control unit which is configured to tune the acousto-optic tunable filter for illuminating the sample with at least one group of different wavelengths at the same exit angle.

Preferably, the control unit is configured to select the at least one group of different wavelengths based on the angular characteristic in response to a user input. Thus, a user is enabled to freely select suitable wavelengths which are collinearly emitted from the acousto-optic tunable filter.

The control unit may further be configured to tune the acousto-optic tunable filter simultaneously to the different wavelengths of the at least one group. Thus, it is ensured that the different wavelengths of the output light are irradiated at the same time onto the sample.

In a preferred embodiment, the optical filter device comprises a first light reflecting element which is configured to deflect the at least one group of different wavelengths output by the acousto-optic tunable filter into a predetermined target direction. Thus, all wavelength groups are enabled to propagate along the same direction towards the sample despite the fact that these groups are emitted from the acousto-optic tunable filter at the different exit angles.

Preferably, a memory may be provided to store calibration data which represent an amount for actuating the first light reflecting elements depending on the exit angle assigned to the at least one group of different wavelengths for deflecting said group into the predetermined target direction, wherein the control unit is configured to control the first light deflecting element based on the calibration data. The first light deflecting element may be formed from a galvanometer mirror.

According to a further embodiment, a second light deflecting element may be provided which deflects the at least one group of different wavelengths output by the acousto-optic tunable filter onto a predetermined target position on the sample. The second light deflecting element may be used to scan the sample with the multiple wavelengths of the output light which are emitted from the acousto-optic tunable filter at the same exit angle.

Preferably, the optical device comprises an illumination objective configured to illuminate the sample with the output light emitted by the acousto-optic tunable filter. As the new filter design ensures that multiple wavelengths of the output light are irradiated in a collinear manner onto the sample, a lateral shift of the illumination focus can be prevented from occurring even if the illumination objective has a high magnification.

The light supply unit may comprise one or more supercontinuum laser sources, for example white light lasers, without being limited thereto.

According to another aspect, a microscope is provided which comprises the optical filter device described above.

Further, a method for illuminating a sample is provided, comprising the steps of generating input light of a predetermined spectral bandwidth in a collinear manner, and using an acousto-optic tunable filter for receiving the input light and emitting diffracted output light including multiple wavelengths from the spectral bandwidth at exit angles towards the sample, said exit angles defining an angular spread among the multiple wavelengths of the output light. The angular spread among the multiple wavelengths of the output light is determined by an angular characteristic varying from a minimum wavelength to a maximum wavelength. The angular characteristic has an extremum at an intermediate wavelength between the minimum wavelength and the maximum wavelength to provide at least one group of different wavelengths having the same exit angle.

Preferably, the sample may be illuminated with the output light emitted from the acousto-optic tunable filter in order to perform confocal microscopy, multiphoton microscopy, Coherent Anti-Stokes Raman (CARS) microscopy, Stimulated Raman Scattering (SRS) microscopy, Sum-Frequency Generation (SFG) microscopy, Difference-Frequency Generation (DFG) microscopy, and/or Frequency-Modulated Stimulated Raman Scattering (FM-SRS) microscopy without being limited thereto.

The afore-mentioned microscopic applications have in common that a specific target region of the sample must be illuminated simultaneously with different wavelengths. Therefore, the optical filter device can be used advantageously in these applications to provide the required sample illumination

Short Description of the Figures

Hereinafter, specific embodiments are described referring to the drawings, wherein:

Fig. 1    is a schematic view of a microscope comprising an optical filter device which includes an acousto-optic tunable filter according to an embodiment,

Fig. 2    is a schematic view of the acousto-optic tunable filter illustrating an operating principle to emit output light by wavelength-dependent light diffraction,

Fig. 3    is a schematic view of an acousto-optic tunable filter according to a comparative example illustrating a relatively large angular spread which conventionally occurs among multiple wavelengths of the output light,

Fig. 4      is a graph showing an angular characteristic which determines an angular spread of the output light in the comparative example,

Fig. 5      is a schematic view illustrating a lateral focus shift which occurs in the comparative example due to the large angular spread of the output light,

Fig. 6      is a graph showing an angular characteristic reducing a wavelength-dependent angular spread of the output light according to an embodiment,

Fig. 7      is a graph showing an angular characteristic reducing the wavelength-dependent angular spread of the output light according to another embodiment,

Fig. 8      is a graph showing an angular characteristic reducing the wavelength-dependent angular spread of the output light according to another embodiment,

Fig. 9      is a schematic view of the acousto-optic tunable filter having an angular characteristic according to one of the embodiments shown in Figures 6 to 8 providing pairs of different wavelengths having the same exit angle,

Fig. 10     is a graph showing an angular characteristic according to another embodiment reducing the wavelength-dependent angular spread of the output light,

Fig. 11     is a schematic view of the acousto-optic tunable filter having an angular characteristic according to the embodiment shown in Figure 10 providing triples of different wavelengths having the same exit angle,

Fig. 12     is a graph showing the angular characteristics according to the embodiment of Figures 4, 6, 7, 8, and 10 in combination,

Fig. 13     is a graph showing an angular characteristic according to an embodiment in which a suitable difference between two wavelengths is to be selected,

Fig. 14     is a graph showing a wavenumber associated with a vibrational mode as a function of the exit angle, and

Fig. 15     is a graph showing an angular characteristic according to an embodiment in which three wavelengths at same exit angle are to be selected.

## Detailed Description

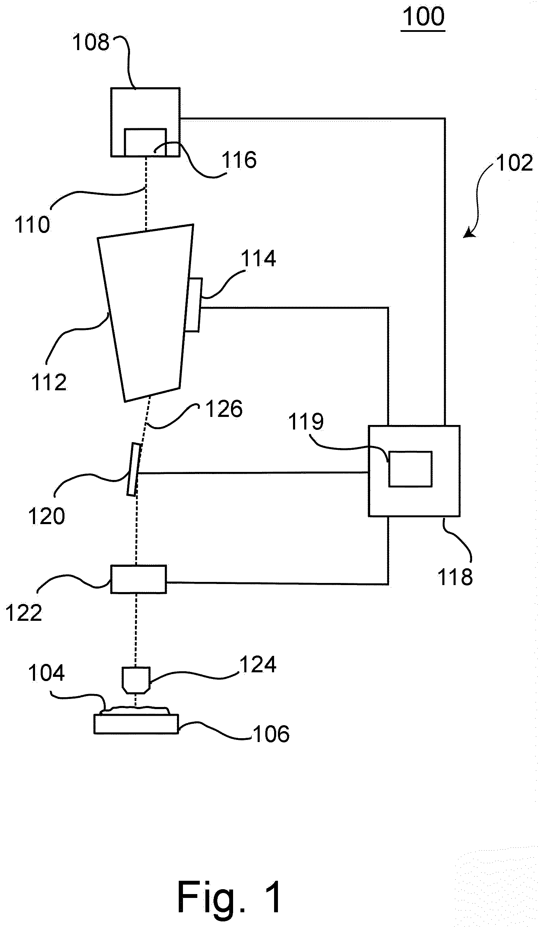

Figure 1 shows a microscope 100 which includes an optical filter device 102 according to an embodiment. The microscope 100 may be configured as a confocal microscope which is used to acquire an image of a sample 104 which is arranged on a microscope stage 106. It is to be noted that Figur 1 shows only those components which may help to understand the technical teaching disclosed herein. In particular, Figure 1 focuses on those components which are used to illuminate the sample 104. Needless to say that the microscope 100 may comprise additional components, in particular those components which are required for image acquisition as for example one or more image sensors / light sensors which are not shown in Figure 1.

The optical filter device 102 of the microscope 100 comprises a light supply unit 108 which is configured to generate input light 110 which is directed to an acousto-optic tunable filter (AOTF) 112 which includes a tunable piezoelectric transducer 114. According to the embodiment shown in Figure 1, the light supply unit 108 may comprise one or more broadband laser sources, for example a supercontinuum laser source 116 which is configured to emit the input light 110 with a broad spectral bandwidth. Just as an example, it may be assumed that the light supply unit 108 is capable of providing a spectral bandwidth which ranges from 400 nm to 2000 nm.

The optical filter device 102 further comprises a control unit 118 including a memory 119 in which various control data may be stored. The control unit 118 can be used to control an overall operation of the optical filter device 102. Specifically, the controller 118 may control the light supply unit 108 and the piezoelectric transducer 114 of the AOTF 112. In addition, the control unit 118 may control first and second light deflection elements 120, 122 to deflect output light 126 emitted from the AOTF 112 as described in more detail below. For actuating the light deflecting elements 120, 122 suitable drive means such as motors may be provided.

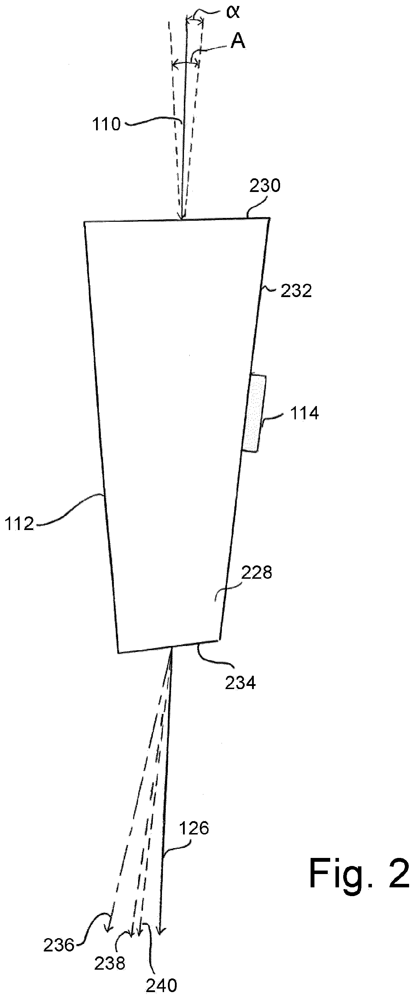

According to the embodiment shown in Figure 1, the optical filter device 102 serves to spectrally filter the illumination light which is irradiated onto the sample 104 through an illumination objective 124. The illumination light is formed from the output light 126 which is emitted from the AOTF 112 and directed by means of the light deflecting elements 120, 122 towards the sample 104. In the present embodiment, the AOTF 112 enables filtering of desired spectral components from the broad spectral bandwidth of the input light 110 provided by the light supply unit 108. The operating principle for filtering the input light 110 based on wavelength-dependent light diffraction is illustrated in Figure 2 showing the AOTF 112 alone.

The AOTF 112 comprises a filter body 228 formed from a crystal such as tellurium dioxide ($TeO_2$) without being limited thereto. The filter body 228 has a light entrance surface 230 which is configured to receive the input light 110 within an angular acceptance range A. In Figure 2, an arrow designated with reference sign 110 indicates a nominal direction of light incidence. The angular acceptance range A is defined by an angular tolerance $\pm \alpha$ by which the light incidence is allowed to deviate from the aforementioned nominal direction. The specific value of the angular tolerance $\alpha$ is predetermined in accordance with the specific filter design based on which the AOTF 112 is manufactured. As explained below in more detail, according to the embodiment, the angular acceptance range A is limited to collinear light incidence over the entire spectral bandwidth of the input light 110. Accordingly, it is to be noted that the width of the angular acceptance range A (and correspondingly the angle tolerance $\alpha$) is shown exaggeratedly large in Figure 2. More specifically, the angular acceptance range A with respect to the input light 110 may be limited over the entire spectral bandwidth to $\pm \alpha$ = +/-5 milliradians, preferably +/-1 milliradian relative to the nominal direction of light incidence.

The filter body 228 of the AOTF 112 comprises a transducer surface 232 on which the piezoelectric transducer 114 is attached. Further, the filter body 228 has a light emission surface 234 through which the spectrally filtered output light 126 is emitted from the AOTF 112.

The optical filter function of the AOTF 112 can be easily changed by applying a suitable radio frequency (RF) signal to the transducer 114. For this purpose, the control unit 118 shown in Figure 1 may determine the RF signal e.g. in response to a user input and apply the RF signal to the transducer 114. It is to be noted that the control unit 118 may simultaneously apply a plurality of RF signals to the transducer 114 so that the output light 126 comprises multiple wavelengths from the spectral bandwidth of the input light 110, each wavelength being assigned to one of the RF frequency signals applied to the transducer 114. For the sake of simplicity, it is assumed that Figure 2 illustrates a case where only one wavelength is selected from the broad spectral bandwidth provided by the input light 110.

In principle, the AOTF 112 operates as known in the art for spectrally filtering the input light 110. Thus, upon receiving the RF signal from the control unit 118, the transducer 114 of the AOTF 112 generates an acoustic wave which propagates through the filter body 228. When propagating through the filter body 228, the acoustic wave causes fluctuations of the refractive index in the crystal material of the filter body 228, these fluctuations acting as a diffraction grating with respect to the light transmitting the filter body 228. By tuning the RF signal and thus also the frequency of the acoustic wave, a desired wavelength can be filtered out from the spectral bandwidth of the input light 110 through acousto-optical diffraction.

In the example of Figure 2 it is assumed that the input light 110 entering the filter body 228 through the light entrance surface 230 is unpolarized light. It is further assumed that the output light 126 which is used for illuminating the sample 104 is given by a diffracted beam of first order having a specific polarization, e.g. horizontal (or vertical) polarization. In this case, a light beam 236 shown in Figure 2 represents a diffracted beam of first order having the other polarization, i.e. vertical (or horizontal) polarization. Further, light beams to 238, 240 represent light beams which are not diffracted, i.e. beams of zero order having vertical and horizontal polarizations, respectively. As can be seen in Figure 2, the light beams 126, 236, 238, 240 are emitted from the AOTF 112 at different exit angles so that they are spatially separated from each other. Since only the output light 126 is used for illumination, the light beams to 236, 238, 240 may be absorbed by suitable means such as a light trap (not shown).

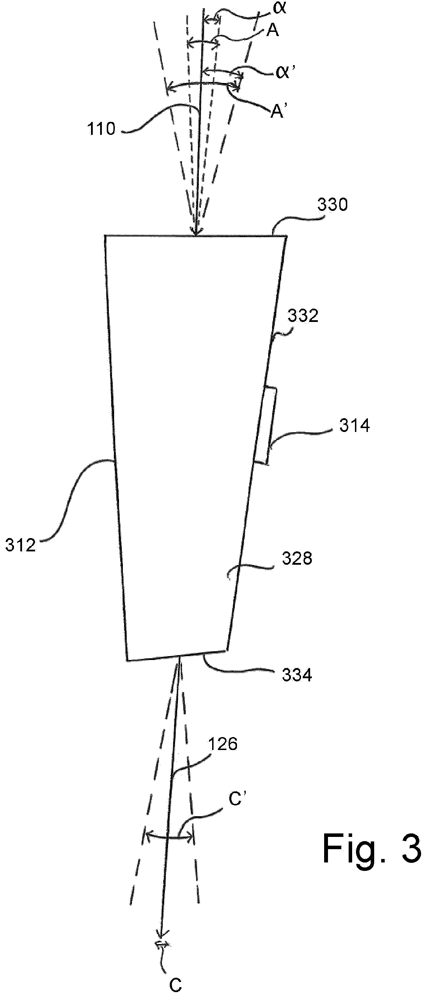

Before continuing the description of the embodiments disclosed herein, a comparative example is explained in the following with reference to Figures 3 to 5.

When designing AOTF crystals, conventionally the parallel-tangent condition is applied. In AOTF crystals that have been designed to satisfy the parallel-tangent condition, the tangents on the wave-vector surfaces of the incident and the diffracted polarizations at the points of intersection of the corresponding waves are parallel to each other. AOTF crystals satisfying the parallel-tangent condition are very tolerant to variations in the angle of light incidence. This ensures that the maximum diffraction efficiency does not change significantly even if the angle of the incident light beam with respect to the light entrance surface is different from a nominal or design value. In other words, if the parallel-tangent condition is satisfied, the angular acceptance range is relatively large.

Figure 3 shows a comparative example with an AOTF 312. As in the embodiment, the AOTF 312 according to the comparative example comprises a filter body 328 which may be formed from a $TeO_2$ crystal or any other suitable material. Furthermore, as in the embodiment, the AOTF 312 comprises a light entrance surface 330, a transducer surface 332 on which a piezoelectric transducer 314 is attached, and a light emitting surface 334. However, in contrast to the embodiment, the AOTF 312 according to the comparative example is manufactured based on a conventional filter design which satisfies the parallel-tangent condition. Consequently, an angular acceptance range A' (corresponding to an angular tolerance $\alpha$') is relatively large.

However, Figure 3 also shows, as realized by the inventor, that satisfying the parallel-tangent condition in order to achieve the relatively large angular acceptance range A' may come at the expense of a relatively large angular spread C' among the multiple wavelengths of the output light 126 over the entire spectral bandwidth which is provided by the input light 110. The aforementioned angular spread C' is determined by the different exit angles at which the multiple wavelengths of the output light 126 are emitted from the light emission surface 334 of the AOTF 312. The greater the spectral bandwidth of the input light 110, the greater the angular spread C' of the output light 126, provided that the entire spectral bandwidth shall be usable. As explained below in more detail, deviating from the conventional filter design satisfying the parallel-tangent condition may be one option among several that allow to reduce the angular spread of the output light 126 (indicated as C in Figure 3) at the expense of limiting the angular acceptance range with respect to the input light 110 (indicated as A and $\alpha$ in Figure 3). Again, the chromatic spreads C, C' and the widths of the angular acceptance ranges A, A' are shown exaggeratedly large in Figure 3 to qualitatively illustrate the proportions between the comparative example and the embodiment. In particular, Figure 3 serves to illustrate that the chromatic spread C is significantly reduced in relation the comparative example which satisfies the parallel-tangent condition.

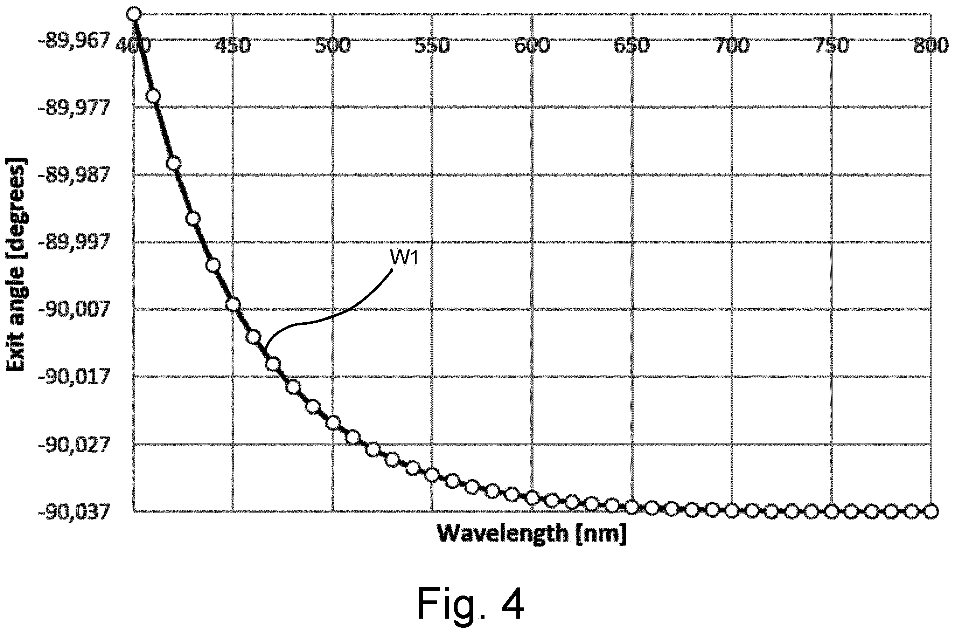

For a commercially available AOTF operating e.g. in a range of 400 nm to 800 nm, the difference in the exit angles between 400 nm and 800 nm is about 1300 microradians as shown in Figure 4. Figure 4 is a graph illustrating an angular characteristic W1 of the AOTF 312 that determines the angular spread C' among the multiple wavelengths of the output light 126. The angular characteristic W1 in Figure 4 indicates how the exit angles of the output light 126 vary depending on the wavelengths. In Figure 4, the abscissa of the graph designates the wavelengths of the output light 128 while the ordinate of the graph designates the exit angles of the output light 126 relative to the light emission surface 334. (The absolute values of the exit angles are not essential in this context. It is rather the relative values that matter.) The graph of Figure 4 shows that the exit angles of the output light 126 monotonically vary by a relatively large amount between a minimum wavelength and a maximum wavelength.

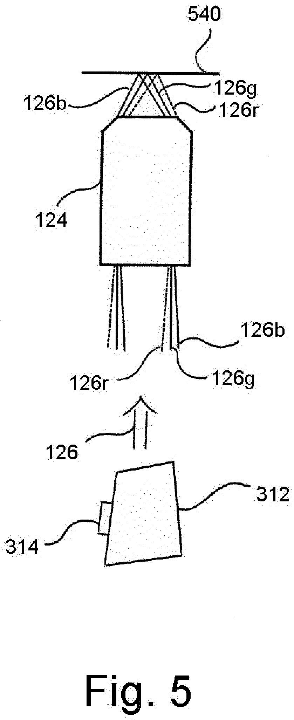

A large angular spread C' may cause significant problems in applications where the light emission from the AOTF is desired to be as collinear as possible over the entire spectral bandwidth, such as in confocal microscopy. Figure 5 illustrates an example in which the output light 126 emitted from the AOTF 312 includes a red spectral component 126r, a green spectral component 126g, and a blue spectral component 126b. It shall be assumed that the different spectral components 126r, 126g, 126b are directed into the illumination objective 124 having an exemplary magnification of 40. Considering an angular spread of 1300 microradians in this example, a lateral focal shift of 322 nm is caused in a focal plane 540 of the illumination objective 124. Such a lateral focus shift is close to the size of a typical point-spread function (PSF). As a result, image quality may deteriorate in case of a large angular spread.

In order to solve the aforementioned problem, the embodiments disclosed herein may be based on a filter design which deviates from the parallel-tangent condition to some extent. For this purpose, the filter design may be determined in relation to a reference design satisfying the parallel-tangent condition to reduce both the angular acceptance range A with respect to the input light 110 and the angular spread C among the multiple wavelengths of the output light 126 when compared with the reference filter design. Generally, the filter design based on which the AOTFs according to the present embodiments are manufactured may comprise at least one filter parameter selected from a group including an orientation of the light entrance surface 230, an orientation of the light emission surface 234, an orientation of the transducer surface 232, and a dimension of the transducer 114.

More specifically, the filter design applied to the embodiments may provide for a reorientation of internal crystal angles slightly away from the parallel-tangent condition. For instance, by varying the angle of light incidence by 1°, the angle of the light entrance surface 230 by 1° and the angle of the transducer surface 232 by less than 0.1° from the respective ideal values of the reference filter design satisfying the parallel-tangent condition, an AOTF design can be achieved which has a significantly smaller angular spread C among the multiple wavelengths of the output light 126 as compared to the reference filter design. Surprisingly, small variations in the above filter parameters have been found to produce significant reductions of the angular spread C. As already mentioned above, reducing the angular spread C while violating the parallel-tangent condition comes at the expense of limiting the angular acceptance range A with respect to the input light 110. However, in applications such as confocal microscopy it is possible to generate the input light 110 over the entire spectral bandwidth in a collinear manner so that there is no disadvantage when limiting the angular acceptance range A of the AOTF.

It should be noted again that the above filter parameters may also be selected such that they do not necessarily deviate the from parallel-tangent condition. Thus, strictly limiting the light entry to a collinear entry throughout the entire spectral bandwidth may give sufficient design freedom even within the parallel-tangent condition framework to achieve the desired angular characteristic with two or more wavelengths at the same exit angle.

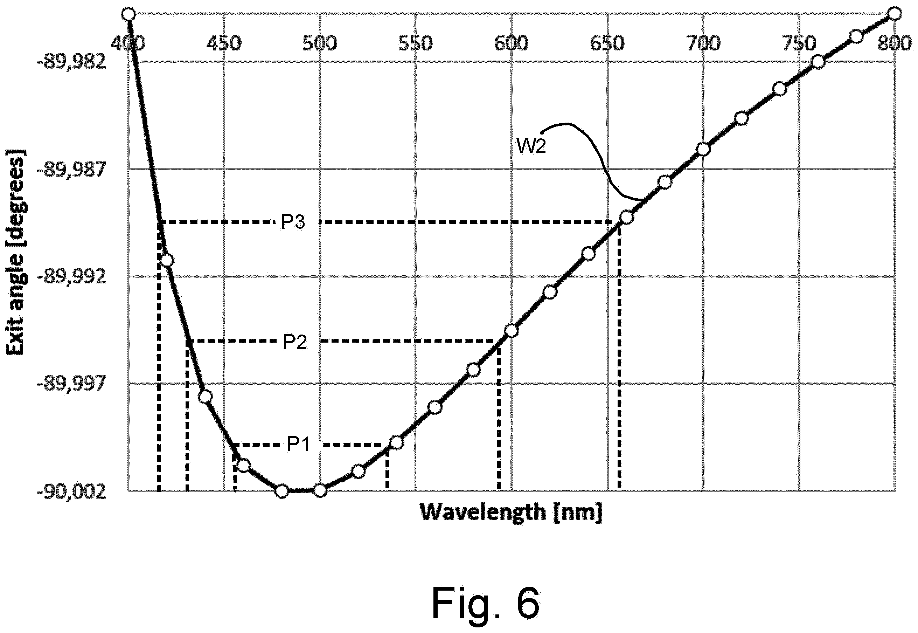

Hereinafter, with reference to Figures 6 to 8, embodiments are disclosed having angular characteristics which enable the angular spread C of the output light 126 to be significantly reduced compared to a conventional filter design.

Figure 6 is a graph showing an angular characteristic W2 according to an embodiment which is to be compared with the angular characteristic W1 of the conventional filter design shown in Figure 4. As in Figure 4, the angular characteristic W2 according to the embodiment of Figure 6 varies from a minimum wavelength of 400 nm to a maximum wavelength of 800 nm. The entire variation of the angular characteristic W2 from 400 nm to 800 nm is less than 400 microradians which is a reduction in the angular spread by almost a factor of 4 compared to the conventional filter design of Figure 4. The angular characteristic W2 has an extremum (minimum) at an intermediate wavelength which is in a range between 450 nm to 550 nm. In other words, while the angular characteristic W1 of the conventional filter design shown in Figure 4 monotonically varies from the minimum wavelength to the maximum wavelength, the angular characteristic W2 according to the embodiment shown in Figure 6 at first decreases from the minimum wavelength to the intermediate wavelength where the extremum of the characteristic W2 is located and then increases from the intermediate wavelength to the maximum wavelength. Accordingly, the new filter design deviates from a monotonically varying angular characteristic enabling the angular spread C to be reduced.

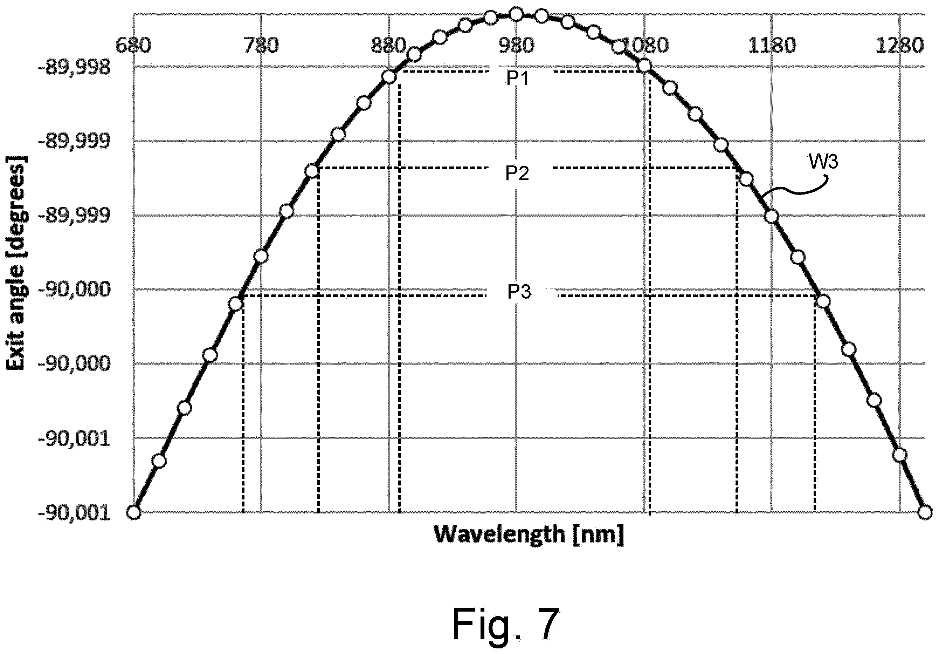

Figure 7 is a graph showing an angular characteristic W3 according to another embodiment. The angular characteristic W3 varies from a minimum wavelength of 680 nm to a maximum wavelength of 1300 nm. The entire variation of the angular characteristic W3 is less than 60 microradians. The angular characteristic W3 has an extremum (maximum) at an intermediate wavelength which is in a range between 880 nm to 1080 nm. Accordingly, while the angular characteristic W1 of the conventional filter design shown in Figure 4 monotonically varies from the minimum wavelength to the maximum wavelength, the angular characteristic W3 at first increases from the minimum wavelength to the intermediate wavelength where the extremum of the characteristic W3 is located and then decreases from the intermediate wavelength to the maximum wavelength. Accordingly, the new filter design deviates from a monotonically varying angular characteristic which enables the angular spread C to be reduced.

Figure 8 is a graph showing an angular characteristic W4 according to another embodiment. The angular characteristic W4 varies from a minimum wavelength of 1000 nm to a maximum wavelength of 2000 nm. The entire variation of the angular characteristic W3 is less than 210 microradians. The angular characteristic W4 has an extremum (maximum) at an intermediate wavelength which is in a range between 1300 nm to 1500 nm. Accordingly, while the angular characteristic W1 of the conventional filter design shown in Figure 4 monotonically varies from the minimum wavelength to the maximum wavelength, the angular characteristic W3 at first increases from the minimum wavelength to the intermediate wavelength where the extremum of the characteristic W3 is located and then decreases from the intermediate wavelength to the maximum wavelength. Accordingly, the new filter design deviates from a monotonically varying angular characteristic which enables the angular spread C to be reduced.

As explained above, each of the angular characteristics W2 to W4 shown in Figures 6 to 8 have an extremum at an intermediate wavelength within a wavelength range where the AOTF 112 is operated. Therefore, each angular characteristic W2 to W4 provides a plurality of pairs P1, P2, P3, each pair including two wavelengths having the same exit angle when being emitted from the AOTF 112 as indicated in Figures 6 to 8 by dashed lines, respectively.

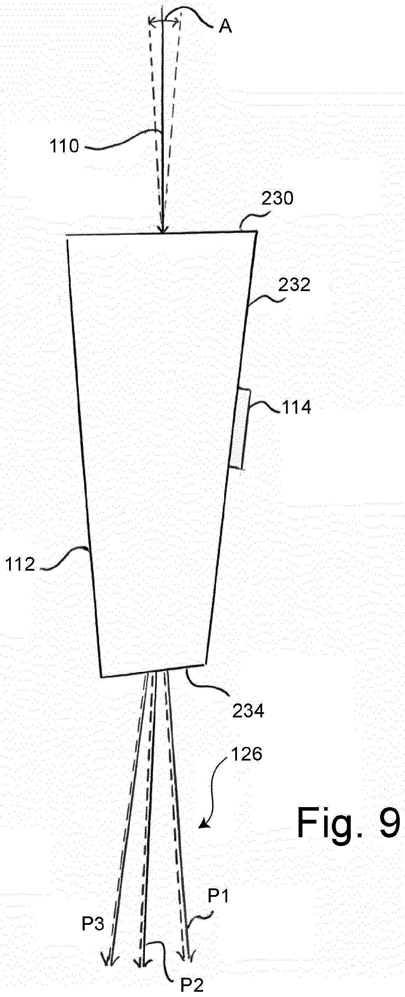

Figure 9 shows the AOTF 112 when designed to implement one of the angular characteristics illustrated in Figures 6 to 8. As can be seen in Figure 9, each group P1, P2 and P3 includes two wavelengths illustrated as solid and dashed lines, respectively, which are emitted from the AOTF 112 at the same exit angle. In other words, while there is still some angular spread among the multiple wavelengths of the output light 126 (albeit significantly reduced compared to the conventional filter design), the angular characteristic enables the wavelengths of each group P1, P2, P3 to exit from the AOTF 112 in a perfectly collinear manner.

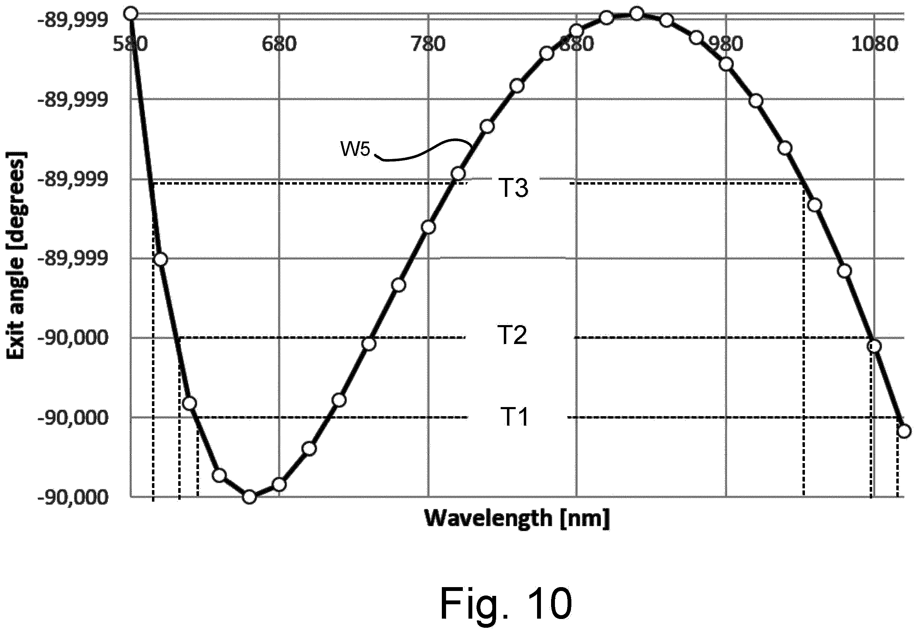

Figure 10 is a graph showing an angular characteristic W5 according to another embodiment. The angular characteristic W5 of Figure 10 is an example where not only one extremum but several extrema are present.

The angular characteristic W5 according to the embodiment of Figure 10 varies from a minimum wavelength of 580 nm to a maximum wavelength of 1100 nm. The angular characteristic W5 has a first extremum (minimum) at a first intermediate wavelength which is between 600 nm and 700 nm. Further, the angular characteristic W5 as a second extremum (maximum) at a second intermediate wavelength which is between 900 nm and 1000 nm. Accordingly, the characteristic W5 decreases from the minimum wavelength to the first intermediate wavelength and then increases from the first intermediate wavelength to the second intermediate wavelength. Finally, the angular characteristic W5 decreases from the second intermediate wavelength to the maximum wavelength.

As the angular characteristic W5 of Figure 10 has both a minimum and a maximum at the first and second intermediate wavelengths, respectively, the angular characteristic W5 provides a plurality of triples T1, T2, T3, each triple including three wavelengths having the same exit angle when being emitted from the AOTF 112 as indicated in Figure 10 by dashed lines.

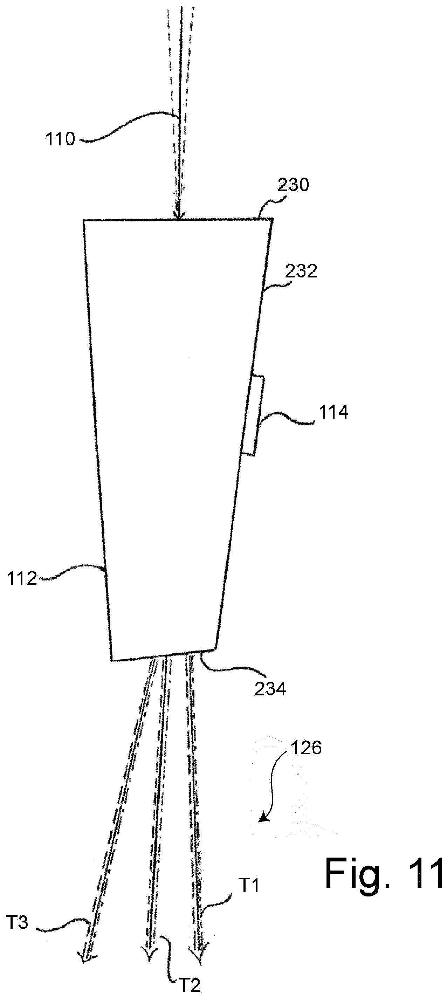

Figure 11 shows the AOTF 112 when designed to implement the angular characteristic illustrated in Figure 10. As can be seen in Figure 11, each triple T1, T2 and T3 includes three wavelengths illustrated as solid, dashed and dash-dotted lines, respectively, which are emitted from the AOTF 112 at the same exit angle. Accordingly, while there is still some angular spread among the multiple wavelengths of the output light 126 (albeit significantly reduced compared to the conventional filter design), the angular characteristic W5 ensures that the wavelengths of each group T1, T2, T3 exit from the AOTF 112 in a perfectly collinear manner.

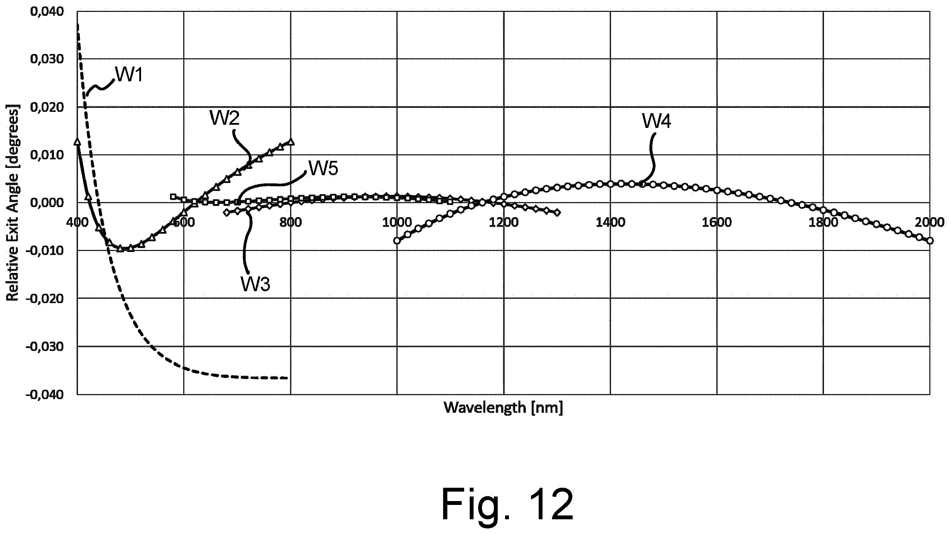

Figure 12 is a graph showing the angular characteristics W1 to W5 described above in combination. As can be seen in Figure 12, the angular characteristics W2 to W5 which are based on the new filter design deviating from the parallel-tangent condition exhibit a significantly smaller angular spread compared to the conventional filter design which satisfies the parallel-tangent condition. Further, it is evident from Figure 12 that the new filter design is suitable to cover a broad spectral bandwidth from 400 nm to 2000 nm including visible and near infrared light.

By providing pairs or triplets of wavelengths having the same exit angle it is possible to illuminate the sample 104 with two and three wavelengths, respectively, which are impinging a target region of the sample 104 perfectly collinear to each other. For this purpose, the control unit 118 may be configured to tune the AOTF 112 simultaneously to the wavelengths of one pair P1, P2, P3 or one triple T1, T2, T3 so that these wavelengths irradiate the target region of the sample 104 simultaneously. The control unit 118 may be further adapted to select one pair P1, P2, P3 or one triple T1, T2, T3 in response to a user input.

As already mentioned above with reference to Figure 1, the first and second light reflecting elements 120, 122 can be used to direct the output light 126 onto the sample 104. Thus, the first light reflecting element 120 may be actuated via the control unit 118 to deflect the respective group P1-P3, T1-T3 of different wavelengths into a predetermined target direction. This ensures that all groups P1-P3, T1-T3 propagate along the same direction towards the sample 104 despite the different exit angles at which they are emitted from the AOTF 112. When propagating along the predetermined target direction, the output light 126 may fall onto the second deflecting element 122 which is activated via the control unit 118 to deflect the output light 126 onto a predetermined target position on the sample 104. For instance, the second light reflecting element 122 may be formed from a scanning device which is configured to scan the sample 104 with the output light 126.

The memory 119 of the control unit 118 may store calibration data such as a calibration table. Based on the calibration data, the control unit 118 actuates the first light deflecting element 120 to deflect the respective group P1-P3, T1-T3 of different wavelengths into the predetermined target direction. The calibration data may represent an amount for actuating the first light deflecting elements 120 depending on the exit angle at which the respective group exits the AOTF 112.

The new filter design which enables two or three different wavelengths to be emitted from the AOTF 112 at the same exit angle can be used in applications which require multiple wavelengths be incident on the sample 104 at the same time and at the same location. One example is Coherent Anti-Stokes Raman (CARS) microscopy where two different wavelengths $\lambda 1$ and $\lambda 2$ are directed simultaneously towards the sample. The difference between inverse of the wavelengths $\lambda 1$ and $\lambda 2$ is proportional to the vibrational frequency difference:

$$\Delta \nu\left(\theta\right) \propto \frac{1}{\lambda_1\left(\theta\right)} - \frac{1}{\lambda_2\left(\theta\right)}$$

In the above relationship, $\Delta \nu$ designates the (vibrational) frequency difference, and $\theta$ designates the unique exit angle at which the wavelengths $\lambda 1$ and $\lambda 2$ are emitted from the AOTF 112.

The frequency difference corresponds to the energy of a vibrational mode in the sample under investigation. When the two wavelengths $\lambda 1$ and $\lambda 2$ impinge the sample at the same time and at the same location, a strong non-linear optical effect occurs in the sample. As a result, a new wavelength is generated at $1/(2/\lambda 1 - 1/\lambda 2)$. For efficient generation of this new wavelength, it is imperative that the two incident wavelengths strike at the same target point and along the same direction in the sample.

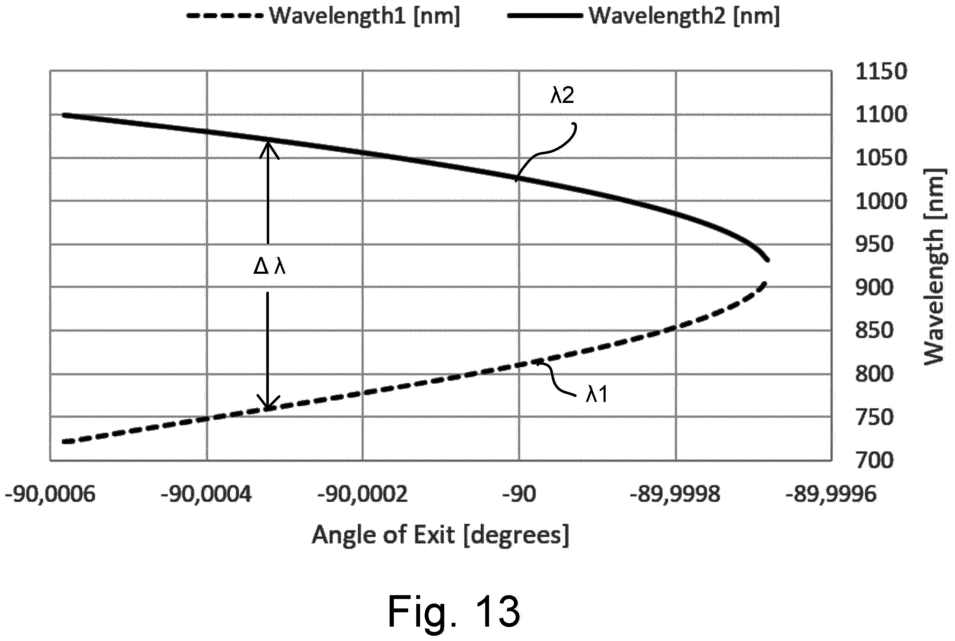

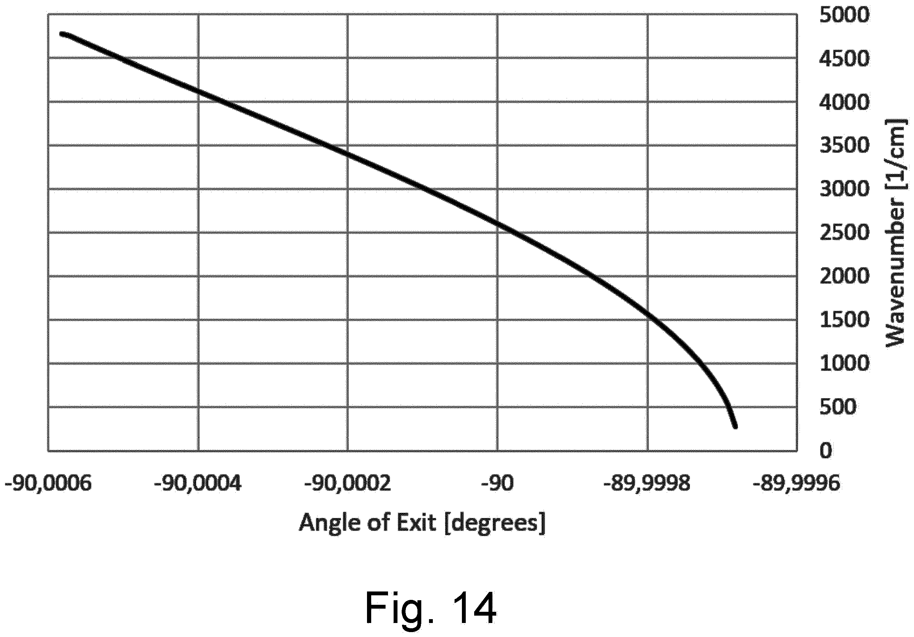

Figures 13 and 14 illustrate how a suitable difference of wavelengths $\lambda 1$ and $\lambda 2$ can be selected to match a vibrational mode to be excited in a CARS experiment. Figure 13 shows wavelengths $\lambda 1$ and $\lambda 2$ which depend on a unique exit angle at which they are emitted from the AOTF 112. The difference of the inverse wavelengths $1/\lambda 1 - 1/\lambda 2$ should match the vibrational mode to be excited which is represented in Figure 14 by a corresponding wavenumber. As can be seen in Figure 14, the vibrational mode depends on the exit angle at which the pair of wavelengths $\lambda 1, \lambda 2$ exit the AOTF 112. Accordingly, by selecting a suitable pair of wavelengths $\lambda 1, \lambda 2$ at a unique exit angle, a specific vibrational mode can be excited. The first light deflecting element 122 can then be used to redirect the pair of wavelengths at an appropriate angle towards the sample.

In order to perform an experiment as explained above with reference to Figures 13 and 14, in principle any of the angular characteristics W2 to W4 as shown in Figures 6 to 8 can be applied as these angular characteristics allow to selectively create pairs of wavelengths which are emitted from the AOTF 112 at unique exit angles. In contrast, the angular characteristic W5 of Figure 10 may be applied to perform an experiment in which it is required to illuminate the sample simultaneously with three different wavelengths $\lambda 1, \lambda 2$ and $\lambda 3$ at the same exit angle. An example for such an experiment can be found in the field of Stimulated Raman Scattering (SRS).

When detecting SRS signals, one often comes across a methodology which is called Frequency-Modulated Stimulated Raman Scattering (FM-SRS). For SRS signal detection, one of the two laser fields is amplitude modulated at a certain frequency. Due to the interaction with the sample, this amplitude modulation gets transferred to the laser field. The signal detection involves extracting the amplitude of this modulation transfer. In FM-SRS, instead of amplitude modulating the first laser field, a modulation of the frequency of the laser field is performed. This involves interleaving optical pulses of two different wavelengths at a certain frequency. The two wavelengths in the first laser field are chosen such that the second laser field interacts only with one of the two wavelengths in the first laser field to generate the SRS signal. The advantage of FM-SRS over the amplitude-modulated SRS version is that the intensity of the laser fields at the sample remains constant. This helps to avoid other undesired non-linear effects such as cross-phase modulation from being detected along with SRS. To perform FM-SRS, it is imperative that three different wavelengths with a predefined energy difference exit the AOTF and impinge the microscopic sample collinearly.

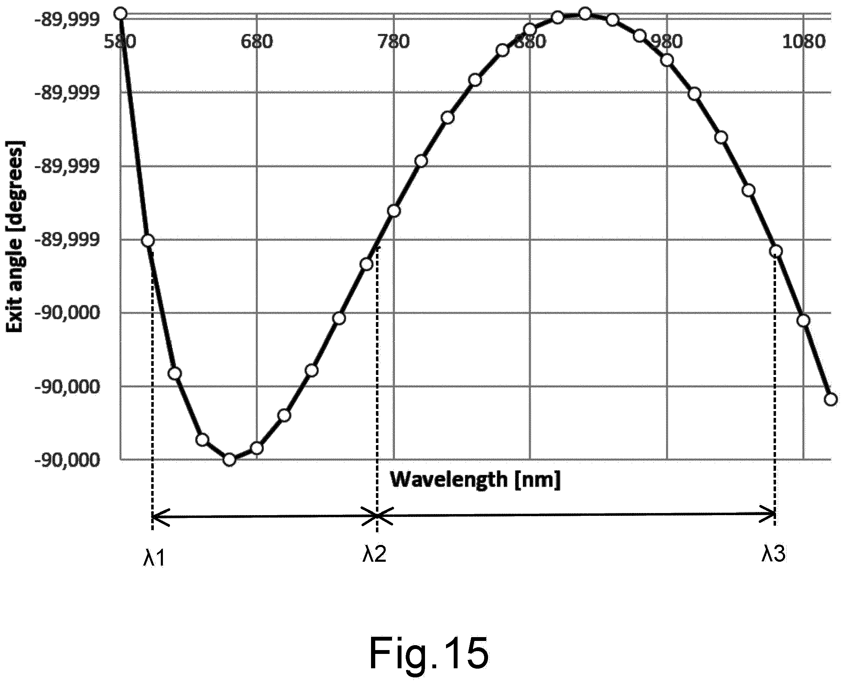

As shown in Figure 15, three wavelengths $\lambda 1$, $\lambda 2$ and $\lambda 3$ can be selected at the same exit angle $\theta$ such that the wavelengths $\lambda 1$, $\lambda 2$ and $\lambda 3$ are spaced apart by predetermined frequency differences $\Delta v_{12}$ and $\Delta v_{23}$ according to following relationships:

$$\Delta v_{12}(\theta) \propto \frac{1}{\lambda_1(\theta)} - \frac{1}{\lambda_2(\theta)}$$

$$\Delta v_{23}(\theta) \propto \frac{1}{\lambda_2(\theta)} - \frac{1}{\lambda_3(\theta)}$$

It is to be noted that the new filter design is not limited to the above applications. For instance, generating two or three output wavelengths which are emitted from the AOTF in a perfectly collinear manner may also be useful for instance in Sum-Frequency Generation (SFG) microscopy and Difference-Frequency Generation (DFG) microscopy.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of Reference Signs

| 100 | microscope |
| 102 | optical filter device |
| 104 | sample |
| 106 | microscope stage |
| 108 | light supply unit |
| 110 | input light |
| 112 | acousto-optic tunable filter |
| 114 | transducer |
| 116 | laser source |
| 118 | control unit |
| 119 | memory |
| 120 | light deflecting element |
| 122 | light deflecting element |
| 124 | illumination objective |
| 126 | output light |
| 228 | filter body |
| 230 | light entrance surface |
| 232 | transducer surface |
| 234, | light emitting surface |
| 236 | light beam |
| 238 | light beam |
| 240 | light beam |
| 312 | acousto-optic tunable filter |
| 314 | transducer |
| 328 | filter body |
| 330 | light entrance surface |
| 332 | transducer surface |
| 334 | light emission surface |
| A, A' | angular acceptance range |
| C, C' | angular spread |
| $\alpha'$, $\alpha$ | angular tolerance |
| W1-W5 | angular characteristics |
| P1-P3 | pairs of wavelengths |
| T1-T3 | triples of wavelengths |

**Claims**

1. An optical filter device (102) for illuminating a sample (104), comprising

   a light supply unit (108) configured to generate input light (110) of a predetermined spectral bandwidth,
   an acousto-optic tunable filter (112) configured to receive the input light (110) and to emit diffracted output light (126) including multiple wavelengths from the spectral bandwidth at exit angles towards the sample (104), said exit angles defining an angular spread (C) among the multiple wavelengths of the output light (126),
   wherein the angular spread (C) among the multiple wavelengths of the output light (126) is determined by an angular characteristic (W2-W5) which varies from a minimum wavelength to a maximum wavelength and indicates how the exit angles vary depending on the wavelengths,
   **characterized in that** the light supply unit (108) is configured to generate the input light (110) of the predetermined spectral bandwidth in a collinear manner, and
   wherein the angular characteristic (W2-W5) has an extremum at an intermediate wavelength between the minimum wavelength and the maximum wavelength to provide at least one group (P1-P3, T1-T3) of different wavelengths having the same exit angle.

2. The optical filter device (102) according to claim 1, wherein the at least one group is a pair (P1-P3) of different wavelengths or a triple (T1-T3) of different wavelengths.

3. The optical filter device (102) according to claim 1 or 2, wherein the at least one group (P1-P3, T1-T3) includes a plurality of groups, each group being assigned to one of a plurality of different exit angles.

4. The optical filter device (102) according to one the preceding claims, comprising a control unit (118) configured to tune the acousto-optic tunable filter (112) for illuminating the sample (104) with the at least one group (P1-P3, T1-T3) of different wavelengths at the same exit angle.

5. The optical filter device (102) according to one the preceding claims, wherein the control unit (118) is configured to select the at least one group (P1-P3, T1-T3) of different wavelengths based on the angular characteristic (W2-W5) in response to a user input.

6. The optical filter device (102) according to claim 4 or 5, wherein the control unit (118) is configured to tune the acousto-optic tunable filter (112) simultaneously to the different wavelengths of the at least one group (P1-P3, T1-T3).

7. The optical filter device (102) according to one of the preceding claims, comprising a first light deflecting element (120) configured to deflect the at least one group (P1-P3, T1-T3) of different wavelengths output by the acousto-optic tunable filter (112) into a predetermined target direction.

8. The optical filter device (102) according to claim 7, comprising a memory (119) configured to store calibration data which represent an amount for actuating the first light deflecting element (120) depending on the exit angle assigned to the at least one group (P1-P3, T1-T3) of different wavelengths for deflecting said group (P1-P3, T1-T3) into the predetermined target direction, wherein the control unit (118) is configured to control the first light deflecting element (120) based on the calibration data.

9. The optical filter device (102) according to claim 7 or 8, comprising a second light deflecting element (122) configured to deflect the at least one group (P1-P3, T1-T3) of different wavelengths output by the acous-to-optic tunable filter (112) onto a predetermined target position on the sample (104).

10. The optical filter device (102) according to one of the preceding claims, comprising an illumination objective (124) configured to illuminate the sample (104) with the output light (126) emitted by the acousto-optic tunable filter (112).

11. The optical filter device (102) according to one of the preceding claims, wherein the light supply unit (108) comprises a supercontinuum laser source.

12. A microscope (100), in particular a confocal microscope, a multiphoton microscope, a Coherent Anti-Stokes Raman (CARS) microscope, a Stimulated Raman Scattering (SRS) microscope, a Sum-Frequency Generation (SFG) microscope, a Difference-Frequency Generation (DFG) microscope, and/or a Frequency-Modulated Stimulated Raman Scattering (FM-SRS) microscope, comprising the optical filter device (102) according to one of the preceding claims.

13. A method for illuminating a sample (104), comprising the following steps:

generating input light (110) of a predetermined spectral bandwidth,
using an acousto-optic tunable filter (112) for receiving the input light (110) and emitting diffracted output light (126) including multiple wavelengths from the spectral bandwidth at exit angles towards the sample, said exit angles defining an angular spread among the multiple wavelengths of the output light (126),
wherein the angular spread (C) among the multiple wavelengths of the output light (126) is determined by an angular characteristic (W2-W5) which varies from a minimum wavelength to a maximum wavelength and indicates how the exit angles vary depending on the wavelengths,
**characterized in that** the input light (110) of the predetermined spectral bandwidth is generated in a collinear manner,
wherein the angular characteristic (W2-W5) provides at least one group (P1-P3, T1-T3) of different wavelengths having the same exit angle, and
wherein the angular characteristic (W2-W5) has an extremum at an intermediate wavelength between the minimum wavelength and the maximum wavelength.

14. The method according to claim 13, wherein the sample (104) is illuminated with the output light emitted from the acousto-optic tunable filter (112) in order to perform confocal microscopy, multiphoton microscopy, Coherent Anti-Stokes Raman (CARS) microscopy, Stimulated Raman Scattering (SRS) microscopy, Sum-Frequency Generation (SFG) microscopy, Difference-Frequency Generation (DFG) microscopy, and/or Frequency-Modulated Stimulated Raman Scattering (FM-SRS) microscopy.

**Patentansprüche**

1. Optische Filtervorrichtung (102) zur Beleuchtung einer Probe (104), umfassend eine Lichtversorgungseinheit (108), die so konfiguriert ist, dass sie Eingangslicht (110) mit einer vorbestimmten spektralen Bandbreite erzeugt,

   ein akusto-optisches abstimmbares Filter (112), das so konfiguriert ist, dass es das Eingangslicht (110) empfängt und gebeugtes Ausgangslicht (126) einschließlich mehrerer Wellenlängen aus der spektralen Bandbreite unter Austrittswinkeln in Richtung der Probe (104) emittiert, wobei die Austrittswinkel eine Winkelspreizung (C) zwischen den mehreren Wellenlängen des Ausgangslichts (126) definieren,
   wobei die Winkelspreizung (C) zwischen den mehreren Wellenlängen des Ausgangslichts (126) durch eine Winkelcharakteristik (W2-W5) bestimmt wird, die von einer minimalen Wellenlänge zu einer maximalen Wellenlänge variiert und angibt, wie die Austrittswinkel in Abhängigkeit von den Wellenlängen variieren, **dadurch gekennzeichnet, dass** die Lichtversorgungseinheit (108) so konfiguriert ist, dass sie das Eingangslicht (110) der vorbestimmten spektralen Bandbreite in einer kollinearen Weise erzeugt, und
   wobei die Winkelcharakteristik (W2-W5) ein Extremum bei einer Zwischenwellenlänge zwischen der minimalen Wellenlänge und der maximalen Wellenlänge aufweist, um mindestens eine Gruppe (P1-P3, T1-T3) von verschiedenen Wellenlängen mit demselben Austrittswinkel bereitzustellen.

2. Optische Filtervorrichtung (102) nach Anspruch 1, wobei die mindestens eine Gruppe ein Paar (P1-P3) verschiedener Wellenlängen oder ein Tripel (T1-T3) verschiedener Wellenlängen ist.

3. Optische Filtervorrichtung (102) nach Anspruch 1 oder 2, wobei die mindestens eine Gruppe (P1-P3, T1-T3) eine Vielzahl von Gruppen einschließt, wobei jede Gruppe einem aus einer Vielzahl von verschiedenen Austrittswinkeln zugeordnet ist.

4. Optische Filtervorrichtung (102) nach einem der vorstehenden Ansprüche, umfassend eine Steuereinheit (118), die so konfiguriert ist, dass sie das akusto-optische abstimmbare Filter (112) so abstimmt, dass die Probe (104) mit der mindestens einen Gruppe (P1-P3, T1-T3) verschiedener Wellenlängen bei demselben Austrittswinkel beleuchtet wird.

5. Optische Filtervorrichtung (102) nach einem der vorstehenden Ansprüche, wobei die Steuereinheit (118) so konfiguriert ist, dass sie die mindestens eine Gruppe (P1-P3, T1-T3) verschiedener Wellenlängen auf der Grundlage der Winkelcharakteristik (W2-W5) in Reaktion auf eine Benutzereingabe auswählt.

6. Optische Filtervorrichtung (102) nach Anspruch 4 oder 5, wobei die Steuereinheit (118) so konfiguriert ist, dass sie das akusto-optische abstimmbare Filter (112) gleichzeitig auf die verschiedenen Wellenlängen der mindestens einen Gruppe (P1-P3, T1-T3) abstimmt.

7. Optische Filtervorrichtung (102) nach einem der vorstehenden Ansprüche, umfassend ein erstes Lichtablenkungselement (120), das so konfiguriert ist, dass es die mindestens eine Gruppe (P1-P3, T1-T3) verschiedener Wellenlängen, die von dem akusto-optischen abstimmbaren Filter (112) ausgegeben werden, in eine vorbestimmte Zielrichtung ablenkt.

8. Optische Filtervorrichtung (102) nach Anspruch 7, umfassend einen Speicher (119), der so konfiguriert ist, dass er Kalibrierungsdaten speichert, die einen Betrag zur Betätigung des ersten Lichtablenkungselements (120) in Abhängigkeit von dem Austrittswinkel, der der mindestens einen Gruppe (P1-P3, T1-T3) verschiedener Wellenlängen zugeordnet ist, darstellen, um die Gruppe (P1-P3, T1-T3) in die vorbestimmte Zielrichtung abzulenken, wobei die Steuereinheit (118) so konfiguriert ist, dass sie das erste Lichtablenkungselement (120) auf der Grundlage der Kalibrierungsdaten steuert.

9. Optische Filtervorrichtung (102) nach Anspruch 7 oder 8, umfassend ein zweites Lichtablenkungselement (122), das so konfiguriert ist, dass es die mindestens eine Gruppe (P1-P3, T1-T3) verschiedener Wellenlängen, die von dem akusto-optischen abstimmbaren Filter (112) ausgegeben werden, auf eine vorbestimmte Zielposition auf der Probe (104) ablenkt.

10. Optische Filtervorrichtung (102) nach einem der vorstehenden Ansprüche, umfassend ein Beleuchtungsobjektiv (124), das so konfiguriert ist, dass es die Probe (104) mit dem von dem akusto-optischen abstimmbaren Filter (112) emittierten Ausgangslicht (126) beleuchtet.

**11.** Optische Filtervorrichtung (102) nach einem der vorstehenden Ansprüche, wobei die Lichtversorgungseinheit (108) eine Superkontinuum-Laserquelle umfasst.

**12.** Mikroskop (100), insbesondere ein konfokales Mikroskop, ein Multiphotonenmikroskop, ein Kohärente Anti-Stokes-Raman- (CARS) Mikroskop, ein Stimulierte Raman-Streuung- (SRS) Mikroskop, ein Summen-Frequenz-Erzeugungs-(SFG) Mikroskop, ein Differenz-Frequenz-Erzeugungs- (DFG) Mikroskop und/oder ein Frequenzmodulierte Stimulierte Raman-Streuung- (FM-SRS) Mikroskop, umfassend die optische Filtervorrichtung (102) nach einem der vorstehenden Ansprüche.

**13.** Verfahren zur Beleuchtung einer Probe (104), umfassend die folgenden Schritte:

Erzeugen von Eingangslicht (110) einer vorbestimmten spektralen Bandbreite,
Verwenden eines akusto-optischen abstimmbaren Filters (112) zum Empfangen des Eingangslichts (110) und Emittieren von gebeugtem Ausgangslicht (126) einschließlich mehrerer Wellenlängen aus der spektralen Bandbreite unter Austrittswinkeln in Richtung der Probe, wobei die Austrittswinkel eine Winkelspreizung zwischen den mehreren Wellenlängen des Ausgangslichts (126) definieren,
wobei die Winkelspreizung (C) zwischen den mehreren Wellenlängen des Ausgangslichts (126) durch eine Winkelcharakteristik (W2-W5) bestimmt wird, die von einer minimalen Wellenlänge zu einer maximalen Wellenlänge variiert und angibt, wie die Austrittswinkel in Abhängigkeit von den Wellenlängen variieren, **dadurch gekennzeichnet, dass** das Eingangslicht (110) mit der vorbestimmten spektralen Bandbreite in einer kollinearen Weise erzeugt wird,
wobei die Winkelcharakteristik (W2-W5) mindestens eine Gruppe (P1-P3, T1-T3) verschiedener Wellenlängen mit demselben Austrittswinkel bereitstellt, und
wobei die Winkelcharakteristik (W2-W5) ein Extremum bei einer Zwischenwellenlänge zwischen der minimalen Wellenlänge und der maximalen Wellenlänge aufweist.

**14.** Verfahren nach Anspruch 13, wobei die Probe (104) mit dem von dem akusto-optischen abstimmbaren Filter (112) emittierten Ausgangslicht beleuchtet wird, um konfokale Mikroskopie, Multiphotonenmikroskopie, kohärente Anti-Stokes-Raman-(CARS) Mikroskopie, Stimulierte Raman-Streuung- (SRS) Mikroskopie, SummenFrequenz-Erzeugungs-(SFG) Mikroskopie, Differenz-Frequenz-Erzeugungs- (DFG) Mikroskopie und/oder Frequenzmodulierte stimulierte Raman-Streuung- (FM-SRS) Mikroskopie durchzuführen.

**Revendications**

**1.** Dispositif de filtre optique (102) pour éclairer un échantillon (104), comprenant

une unité d'alimentation en lumière (108) configurée pour générer une lumière d'entrée (110) d'une bande passante spectrale prédéterminée,
un filtre acousto-optique accordable (112) configuré pour recevoir la lumière d'entrée (110) et pour émettre une lumière de sortie (126) diffractée incluant des longueurs d'onde multiples à partir de la bande passante spectrale à des angles de sortie vers l'échantillon (104), lesdits angles de sortie définissant une propagation angulaire (C) parmi les longueurs d'onde multiples de la lumière de sortie (126),
dans lequel la propagation angulaire (C) parmi les longueurs d'onde multiples de la lumière de sortie (126) est déterminée par une caractéristique angulaire (W2-W5) qui varie d'une longueur d'onde minimale à une longueur d'onde maximale et indique comment les angles de sortie varient en fonction des longueurs d'onde,
**caractérisé en ce que** l'unité d'alimentation en lumière (108) est configurée pour générer la lumière d'entrée (110) de la bande passante spectrale prédéterminée de manière colinéaire, et
dans lequel la caractéristique angulaire (W2-W5) présente un extrême à une longueur d'onde intermédiaire entre la longueur d'onde minimale et la longueur d'onde maximale pour fournir au moins un groupe (P1-P3, T1-T3) de longueurs d'onde différentes présentant le même angle de sortie.

**2.** Dispositif de filtre optique (102) selon la revendication 1, dans lequel l'au moins un groupe est une paire (P1-P3) de longueurs d'onde différentes ou un triple (T1-T3) de longueurs d'onde différentes.

**3.** Dispositif de filtre optique (102) selon la revendication 1 ou 2, dans lequel l'au moins un groupe (P1-P3, T1-T3) inclut une pluralité de groupes, chaque groupe étant affecté à l'un parmi une pluralité d'angles de sortie différents.

**4.** Dispositif de filtre optique (102) selon l'une des revendications précédentes, comprenant une unité de commande (118) configurée pour accorder le filtre acoustique-optique accordable (112) pour éclairer l'échantillon (104) avec l'au moins un groupe (P1-P3, T1-T3) de longueurs d'onde différentes au même angle de sortie.

5. Dispositif de filtre optique (102) selon l'une des revendications précédentes, dans lequel l'unité de commande (118) est configurée pour sélectionner l'au moins un groupe (P1-P3, T1-T3) de longueurs d'onde différentes sur la base de la caractéristique angulaire (W2-W5) en réponse à une entrée utilisateur.

6. Dispositif de filtre optique (102) selon la revendication 4 ou 5, dans lequel l'unité de commande (118) est configurée pour accorder le filtre acousto-optique accordable (112) simultanément aux différentes longueurs d'onde de l'au moins un groupe (P1-P3, T1-T3).

7. Dispositif de filtre optique (102) selon l'une des revendications précédentes, comprenant un premier élément de déviation de lumière (120) configuré pour dévier l'au moins un groupe (P1-P3, T1-T3) de longueurs d'ondes différentes émises par le filtre acousto-optique accordable (112) dans une direction cible prédéterminée.

8. Dispositif de filtre optique (102) selon la revendication 7, comprenant une mémoire (119) configurée pour stocker des données d'étalonnage qui représentent une quantité pour actionner le premier élément de déviation de lumière (120) en fonction de l'angle de sortie affecté à l'au moins un groupe (P1-P3, T1-T3) de longueurs d'onde différentes pour dévier ledit groupe (P1-P3, T1-T3) dans la direction cible prédéterminée, dans lequel l'unité de commande (118) est configurée pour commander le premier élément de déviation de lumière (120) sur la base des données d'étalonnage.

9. Dispositif de filtre optique (102) selon la revendication 7 ou 8, comprenant un second élément de déviation de lumière (122) configuré pour dévier l'au moins un groupe (P1-P3, T1-T3) de longueurs d'ondes différentes émises par le filtre acousto-optique accordable (112) vers une position cible prédéterminée sur l'échantillon (104).

10. Dispositif de filtre optique (102) selon l'une des revendications précédentes, comprenant un objectif d'éclairage (124) configuré pour éclairer l'échantillon (104) avec la lumière de sortie (126) émise par le filtre acousto-optique accordable (112).

11. Dispositif de filtre optique (102) selon l'une des revendications précédentes, dans lequel l'unité d'alimentation en lumière (108) comprend une source laser supercontinuum.

12. Microscope (100), en particulier un microscope confocal, un microscope multiphoton, un microscope à diffusion Raman Anti-Stokes cohérente (CARS), un microscope à diffusion Raman stimulée (SRS), un microscope à génération de fréquence somme (SFG), un microscope à génération de fréquence différentielle (DFG) et/ou un microscope à diffusion Raman stimulée à modulation de fréquence (FM-SRS), comprenant le dispositif de filtre optique (102) selon l'une des revendications précédentes.

13. Procédé d'éclairage d'un échantillon (104), comprenant les étapes suivantes :

la génération d'une lumière d'entrée (110) d'une bande passante spectrale prédéterminée, à l'aide d'un filtre acousto-optique accordable (112) pour recevoir la lumière d'entrée (110) et émettre une lumière de sortie (126) diffractée incluant des longueurs d'onde multiples à partir de la bande passante spectrale à des angles de sortie vers l'échantillon, lesdits angles de sortie définissant une propagation angulaire parmi les longueurs d'onde multiples de la lumière de sortie (126),
dans lequel la propagation angulaire (C) parmi les longueurs d'onde multiples de la lumière de sortie (126) est déterminée par une caractéristique angulaire (W2-W5) qui varie d'une longueur d'onde minimale à une longueur d'onde maximale et indique comment les angles de sortie varient en fonction des longueurs d'onde, **caractérisé en ce que** la lumière d'entrée (110) de la bande passante spectrale prédéterminée est générée de manière colinéaire,
dans lequel la caractéristique angulaire (W2-W5) fournit au moins un groupe (P1-P3, T1-T3) de longueurs d'onde différentes présentant le même angle de sortie, et
dans lequel la caractéristique angulaire (W2-W5) présente un extrême à une longueur d'onde intermédiaire entre la longueur d'onde minimale et la longueur d'onde maximale.

14. Procédé selon la revendication 13, dans lequel l'échantillon (104) est éclairé avec la lumière de sortie émise par le filtre acousto-optique accordable (112) afin de réaliser une microscopie confocale, une microscopie multiphoton, une microscopie à diffusion Raman Anti-Stokes cohérente (CARS), une microscopie à diffusion Raman stimulée (SRS), une microscopie à génération de fréquence somme (SFG), une microscopie à génération de fréquence différentielle (DFG) et/ou une microscopie à diffusion Raman stimulée à modulation de fréquence (FM-SRS).

**Fig. 1**

Fig. 2

Fig. 3

Fig. 4

EP 4 145 207 B1

# Fig. 5

Fig. 6

Fig. 7

Fig. 8

Fig. 9

Fig. 10

EP 4 145 207 B1

Fig. 11

Fig. 12

Fig. 13

Fig. 14

EP 4 145 207 B1

Fig.15

EP 4 145 207 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* WO 2019138119 A1

* WO 2019206646 A1

**Non-patent literature cited in the description**

* **J.D. WARD et al.** Acousto-optic devices for operation with 2µm fibre lasers. *Proc. of SPIE*, 2015, vol. 9730
* **I. C. CHANG**. Noncollinear acousto-optic filter with large angular aperture. *Appl. Phys. Lett.*, 1974, vol. 25, 370

* Acousto Opttic Tunable Filters / Basic Theory And Design Considerations. *Application Note ISOMET*, 8